# EUROPÄISCHE PATENTSCHRIFT

(11) **EP 0 824 439 B1**
(45) Veröffentlichungstag und Bekanntmachung des Hinweises auf die Patenterteilung: **09.06.1999**
(21) Anmeldenummer: 96902234.2
(22) Anmeldetag: 15.02.1996
(51) Int. Cl.: B62D 33/037

(54) **VERRIEGELUNGSVORRICHTUNG**
LOCKING DEVICE
DISPOSITIF DE VERROUILLAGE

(30) Priorität: 18.02.1995 DE 19505534
(43) Veröffentlichungstag der Anmeldung: 25.02.1998
(73) Patentinhaber: FISCHER, Friedrich, 21037 Hamburg (DE)
(72) Erfinder: FISCHER, Friedrich, 21037 Hamburg (DE)
(74) Vertreter: Bauer, Wulf, Dr.
(86) Internationale Anmeldenummer: DE9600233
(87) Internationale Veröffentlichungsnummer: WO9626100

(56) Entgegenhaltungen:
- DE-B- 1 140 091
- DE-U- 8 519 518
- FR-A- 752 987
- FR-A- 2 048 146
- GB-A- 2 100 678
- US-A- 1 588 289

## Beschreibung

Die Erfindung betrifft eine Vorrichtung zur Verriegelung von Klappen im Bereich von Kraftfahrzeugen oder von Anhängern von Kraftfahrzueugen nach dem Oberbegriff des Patentanspruchs 1.

Aus der FR-A-2 048 146 ist eine derartige Vorrichtung mit allen Merkmalen des Oberbegriffs des Patentanspruchs 1 bekannt. Zusätzlich weist bei ihr das Sicherungselement einen Haken auf.

In der Regel sind je Klappe zwei oder vier Sicherungselemente vorgesehen. Das überwiegend manuell von einer Person durchzuführende Entriegeln und Verriegeln gestaltet sich deshalb zeitaufwendig. Darüber hinaus resultieren Gefahren daraus, daß zur Durchführung eines Verriegelungsvorganges eine Hand benötigt wird, so daß die Klappe lediglich mit der anderen Hand abgestützt werden kann. Hierdurch können insbesondere bei schräg stehenden Fahrzeugen erhebliche Gefährdungen hervorgerufen werden.

Aufgabe der vorliegenden Erfindung ist es daher, eine Vorrichtung der einleitend genannten Art derart zu konstruieren, daß die genutzungsfreundlichkeit erhöht wird.

Diese Aufgabe wird erfindungsgemäß gelöst durch die Merkmale des Patentanspruchs 1.

Durch die Verwendung des Führungselementes ist es lediglich erforderlich, die Klappe zu schließen, um automatisch einen Verriegelungsvorgang durchzuführen. Das Sicherungselement wird durch das Entlanggleiten entlang des Stellprofils, beispielsweise einer Rampe, derart positioniert, daß automatisch eine Einführung in das Gegenelement erfolgt. Bei einer typischen Anordnung von als Haken ausgebildeten Sicherungselementen kann das Einführen in das Gegenelement durch die Schwerkraft erfolgen. Insbesondere ist aber auch daran gedacht, eine entsprechende Federbelastung vorzusehen, um für ein zuverlässiges Einführen des Sicherungselementes in das Gegenelement Sorge zu tragen. Durch die Verwendung einer Federvorspannung ist es ebenfalls möglich, Verriegelungsrichtungen vorzusehen, die nicht in Richtung der Schwerkrafteinwirkung verlaufen.

Eine preiswerte Fertigung wird auch dadurch unterstützt, daß das Gegenelement als Öse ausgebildet ist.

Die Vorgabe einer Bahn zu Positionierung des Sicherungselementes kann dadurch erfolgen, daß das Stellprofil als ein gebogenes Flachprofil ausgebildet ist.

Zur kontinuierlichen Überführung des Sicherungselementes in eine Aufnahme des Gegenelementes wird vorgeschlagen, daß das Stellprofil auf einem Höhenniveau einer Öffnung in das Gegenelement einmündet.

Gemäß einer Ausführungsform ist es möglich, daß das Sicherungselement im Bereich des Fahrzeuges und das Gegenelement im Bereich der Klappe angeordnet ist.

Alternativ ist es aber auch denkbar, daß das Sicherungselement im Bereich der Klappe und das Gegenelement im Bereich des Fahrzeuges angeordnet ist.

Eine weitere Vereinfachung der Bedienung kann dadurch erfolgen, daß mindestens zwei Sicherungselemente zur Bewegungskoordinierung miteinander gekoppelt sind.

Eine weitere Erhöhung der Bedienungssicherheit kann dadurch erfolgen, daß das Sicherungselement und das Gegenelement als ein Spannverschluß ausgebildet sind.

In der Zeichnung sind Ausführungsbeispiele der Erfindung schematisch dargestellt. Es zeigen:
- Fig. 1: eine perspektivische Darstellung einer Vorrichtung mit Rampe und hakenförmigem Sicherungselement, das mit einer Bedienstange verbunden ist,
- Fig. 2: eine Darstellung der Vorrichtung gemäß Fig. 1 in einem verriegelten und gesicherten Zustand,
- Fig. 3: eine Seitenansicht eines Sicherungselementes mit Freilauf zur Verhinderung eines Hochschlagens eines Handteiles bei einem Einfedern des Verriegelungsbolzens
**und**
- Fig. 4: eine Draufsicht auf das Sicherungselement gemäß Fig. 3.

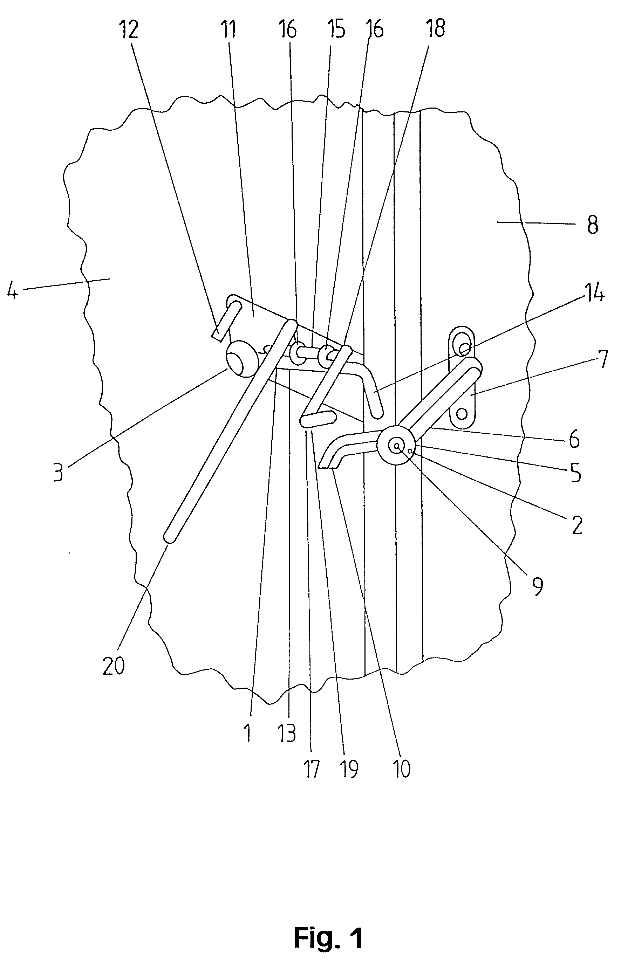

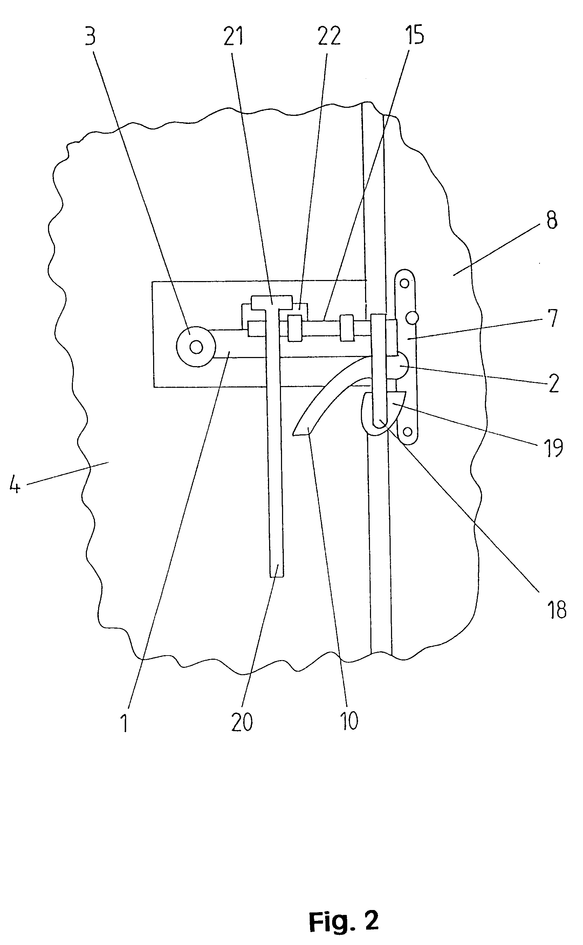

Gemäß der Ausführungsform in Fig. 1 bzw. Fig. 2, die nicht dem Patentanspruch 1 unterfällt, ist ein Sicherungselement (1) als ein verschwenkbar angeordneter Haken ausgebildet, der in ein ösenförmiges Gegenelement (2) einführbar ist. Das Sicherungselement (1) ist über ein Schwenkgelenk (3) beweglich mit einer Seitenwand (4) eines Hauptelementes (5), beispielsweise eines Anhängers, verbunden. Das Gegenelement (2) ist über ein Verlängerungssegment (6) mit einem Grundsegment (7) verbunden, das mit einer Klappe (8) verschraubt ist. Das Gegenelement (2) weist eine Öffnung (9) zur Aufnahme des Sicherungselementes (1) auf. Auf einem Höhenniveau der Öffnung (9) mündet in das Gegenelement (2) ein Stellprofil (10) ein, das bei dieser Ausführungsform als eine Rampe ausgebildet ist.

Das Sicherungselement (1) ist im Bereich einer Grundplatte (11) gehaltert. Zur Begrenzung eines Öffnungswinkels des Sicherungselementes (1) ist ein Anschlagbolzen (12) vorgesehen. Das hakenförmige Sicherungselement (1) besteht im wesentlichen aus einem Schaft (13) sowie einem vom Gegenelement (2) aufnehmbaren Zapfen (14). Im wesentlichen parallel zum Schaft (13) erstreckt sich eine Welle (15), die drehbeweglich in ösenförmigen Lagerungen (16) geführt ist, die mit dem Schaft (13) starr verbunden sind. Mit der Welle (15) ist ein Arretierungselement (17) verbunden, das im wesentlichen aus einem Distanzelement (18) und einem Querelement (19) ausgebildet ist. In einem verriegelten Zustand ist das Querelement (19) unter das Gegenelement (2) geführt, so daß ein Herausziehen des Sicherungselementes (1) aus dem Gegenelement (2) nicht möglich ist.

Ebenfalls mit der Welle (15) ist eine Bedienstange (20) verbunden. Die Bedienstange (20) ist als Handgriff ausgebildet und weist im Bereich ihres der Seitenwand (4) zugewandten Endes ein Umlenkprofil (21) auf, das sich auf einem Gegenlager (22) stützt. In einem geschlossenen Zustand des Sicherungselementes (1) und des Gegenelementes (2) erstreckt sich die Bedienstange (20) im wesentlichen parallel zur Seitenwand (4). Bei der Durchführung eines Öffnungsvorganges wird die Bedienstange (20) ergriffen und in lotrechter Richtung nach oben angehoben. Hierbei rollt das Umlenkprofil (21) auf dem Gegenlager (22) ab und hebt die Welle (15) und damit das Sicherungselement (1) an. Das Sicherungselement (1) führt hierdurch im Bereich des Schwenkgelenkes (3) eine Drehbewegung durch. Aufgrund der Kopplung des Arretierungselementes (17) mit der Welle (15) und wird bei der Durchführung einer vorgegebenen Öffnungsbewegung das Arretierungselement (17) zur Seite geschwenkt, so daß das Sicherungselement (1) aus dem Gegenelement (2) herausgleiten kann.

Fig. 2 zeigt die Vorrichtung gemäß Fig. 1 in einem verriegelten Zustand. Bei dieser Darstellung sind insbesondere das Umlenkprofil (21) und das Gegenlager (22) erkennbar, die bei der Darstellung gemäß Fig. 1 verdeckt sind. Ebenfalls ist erkennbar, daß das Querelement (19) unterhalb des Gegenelementes (2) geführt ist. Die Bedienstange (20) erstreckt sich im wesentlichen parallel zur Seitenwand (4), so daß Behinderungen durch seitlich abstehende Teile vermieden werden.

Grundsätzlich ist es unerheblich, ob, wie in den Zeichnungen dargestellt, das Sicherungselement (1) im Bereich der Seitenwand (4) und das Gegenelement (2) im Bereich der Klappe (8) angeordnet ist, oder ob vorgesehen ist, daß das Gegenelement (2) im Bereich der Seitenwand (4) und das Sicherungselement (1) im Bereich der Klappe (8) angeordnet ist. Die jeweilige Ausführungsform kann entsprechend den vorliegenden Randbedingungen gewählt werden.

Alternativ zu der Ausbildung des Stellprofils (1) als schiefe Ebene oder als Führungsbahn ist es auch möglich, das Stellprofil (10) als einen Auslösemechanismus auszubilden, der das Sicherungselement (1) von der geöffneten in die verriegelte Positionierung überführt. Beispielsweise ist es möglich, das Stellprofil (10) als einen Stellfinger auszubilden, der ein hebelartiges Sicherungselement (1) mechanisch verschwenkt. Ebenfalls ist es möglich, das Sicherungselement (1) vorgespannt in einer Öffnungspositionierung anzuordnen und durch das Stellprofil (10) lediglich eine Auslösung vorzunehmen. Das Sicherungselement (1) wird dann durch Federkraft in die verriegelte Positionierung überführt.

Generell ist es möglich, bei federnd vorgespannten Sicherungselementen (1) Federkolben zur Sicherung vorzusehen. Ebenfalls ist es möglich, beispielsweise bei hakenförmigen Sicherungselementen (1) das Gegenelement (2) als schräg angeordnete Buchse auszuführen, so daß der Zapfen (14) des Sicherungselementes (1) innerhalb des Gegenelementes (2) entlang einer schiefen Ebene geführt wird. Hier führt eine stärkere Belastung des Sicherungselementes (1) zu einer Erhöhung der Sicherungskraft. Alternativ zur Verwendung eines Druckfederbolzens zur Sicherung des Zapfens (14) innerhalb des Gegenelementes (2) kann beispielsweise auch eine Stahlfeder verwendet werden.

Die Druckfederbolzen beziehungsweise die Stahlfedern werden in der Regel quer zur Einführrichtung des Sicherungselementes (1) in das Gegenelement (2) angeordnet. Die Anordnung erfolgt dabei in der Regel so, daß zunächst bei einem Schließen der Klappe (8) die Sicherungselemente (1) im Bereich der Gegenelemente (2) einrasten und die Klappe (8) haltern. Anschließend wird durch eine Verstärkung des Druckes auf die Sicherungselemente (1) der zusätzliche Federwiderstand der Druckfederbolzen beziehungsweise der Stahlfedern überwunden und die Elemente arretieren die Sicherungselemente (1).

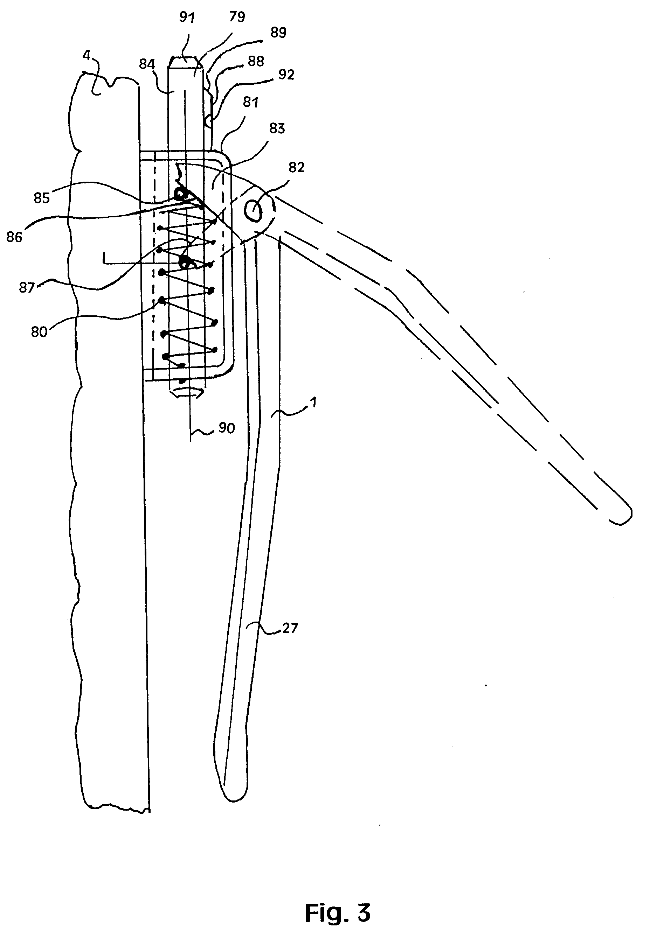

Fig. 3 zeigt eine Ausführungsform nach Patentanspruch 1, bei der das Sicherungselement (1) zweiteilig ausgebildet ist. Das Griffteil (27) ist verschwenkbar von einem Grundrahmen (81) gehaltert und über ein Schwenklager (82) mit dem Grundrahmen (81) verbunden. Das Sicherungselement (1) ragt mit einer Betätigungsklaue (83) bis in den Bereich eines Verriegelungsbolzens (79), der von einer Druckfeder (80) relativ zum Grundrahmen (81) abgestützt ist. Mit einem Verriegelungsende (84) ragt der Verriegelungsbolzen (79) aus dem Grundrahmen (81) heraus. Der Verrieglungsbolzen (79) weist einen Stellangriff (85) auf, der beispielsweise als ein Querstift ausgebildet sein kann. Der Stellangriff (85) wird von der Betätigungsklaue (83) positioniert.

Die Betätigungsklaue kann beispielsweise durch ein abgewinkeltes Ende des Griffteiles (27) ausgebildet sein, das durch ein zusätzliches und in einem Winkel zum gebogenen Ende befestigtes Anschlagteil ergänzt wird. Ebenfalls ist es aber auch möglich, eine einteilige Ausführungsform vorzusehen und die Betätigungsklaue (83) durch eine entsprechende Aussparung bereitzustellen. Wesentlich ist hierbei, daß für den Stellangriff (85) ein Freilauf zwischen zwei Begrenzungsflanken (86,87) der Betätigungsklaue (83) bereitgestellt wird. Alternativ zur Verwendung einer Druckfeder (80) ist es ebenfalls denkbar, eine mit dem Grundrahmen (81) verbundene Zugfeder vorzusehen, die das Verriegelungsende (84) des Verriegelungsbolzen (79) aus dem Grundrahmen (81) herauszieht. Gleichfalls ist es denkbar, andere federnde Elemente, beispielsweise pneumatische Federn, einzusetzen.

Aufgrund des Freilaufes im Bereich der Betätigungsklaue (83) ist es möglich, einen Entriegelungsvorgang durch ein Anheben des Griffteiles (27) vorzunehmen. Das Verriegelungsende (84) wird hierbei weiter in den Bereich des Grundrahmens (81) hineingezogen und gibt beispielsweise ein Gegenelement (2) frei.

Gestrichelt ist in Fig. 3 eine angehobene Positionierung des Griffteiles (27) dargestellt.

Ebenfalls ist es denkbar, nur die in Fig. 3 dargestellte obere Abwinkelung des Sicherungselementes (1) vorzusehen und den Freilauf nur vom Federweg der Druckfeder (80) zu begrenzen. Der Vorteil des Freilaufes liegt darin, daß bei einem Zuschlagen beispielsweise eine Klappe und einem hierdurch verursachten Einführen des Verriegelungsbolzen (79) in den Grundrahmen (81) keine Bewegung des Griffteiles (27) verursacht wird. Verletzungen durch hochschlagende Griffteile (27) können hierdurch vermieden werden.

Die in Fig. 3 eingezeichnete im wesentlichen vertikale Positionierung des Griffteiles (27) wird durch die einwirkende Schwerkraft stabilisiert.

Insbesondere ist auch daran gedacht, im Bereich des Verriegelungsendes (84) ein Keilelement (88) anzuordnen. Vorteilhaft ist es insbesondere, das Keilelement (89) mit einer Einführanschrägung (89) und einer im weiteren im wesentlichen parallel zu einer Längsachse (90) des Verriegelungsbolzens (87) verlaufenden Orientierung zu versehen. Das Keilelement (88) führt zu einer Verspannung relativ zum Gegenelement (2) und verhindert eine Lockerung. Insbesondere ist auch daran gedacht, die Einführanschrägung (89) mit einem Abstand zu einem Ende (91) des Verriegelungsbolzens (29) anzuordnen. Hierdurch ist es möglich, zunächst ein Einführen des Verriegelungsbolzens (79) mit relativ grober Toleranz in das Gegenelement (2) vorzusehen und erst in einem zweiten Verriegelungsschritt eine Verspannung vorzunehmen. Im Bereich des Keilelementes (88) kann ebenfalls ein zusätzliches Sicherungselement (92) angeordnet werden, das beispielsweise als eine Kerbe ausgebildet ist, in die ein federndes Element im Bereich des Gegenelementes (2) eingreift. Das federnde Element kann beispielsweise als querverlaufender Stahlstift, als Federdraht oder anderweitig ausgebildet sein.

Generell ist es bei allen beschriebenen Verriegelungselementen und Sicherungselementen (1) auch möglich, reibungsvermindernde Elemente, beispielsweise Buchsen oder Rollräder, einzusetzen.

Bei der Verwendung eines Keilelementes (88) ist insbesondere die Verwendung einer Betätigungsklaue (83) mit vom Sicherungselement (1) zweiseitig begrenztem Freilauf sinnvoll, da durch die Begrenzungsfläche (87) ein Hineindrücken des Verriegelungsbolzens (79) mit dem Keilelement (88) in das Gegenelement (2) erfolgen kann.

Bei Anwendungen im Bereich der Kraftfahrzeugtechnik wird das beschriebene Sicherungselement (1) vorzugsweise im Bereich einer feststehenden Seitenwand oder eines feststehenden Holmes angeordnet und das Gegenelement (2) befindet sich im Bereich eines beweglichen Elementes, beispielsweise einer Klappe.

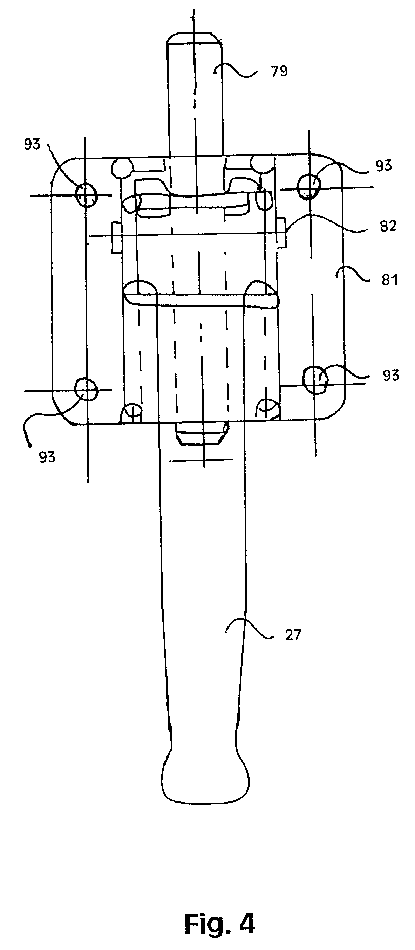

Aus der Darstellung in Fig. 4 ist erkennbar, daß der Grundrahmen (21) mit einer Befestigungsplatte versehen sein kann, die Montagebohrungen (93) aufweist.

Bei einer Anordnung des Gegenelementes (2) im Bereich einer Klappe (8) ist insbesondere an eine Ausbildung als Rungenverschluß gedacht.

## Patentansprüche

1. Vorrichtung zur Verriegelung von Klappen im Bereich von Kraftfahrzeugen oder von Anhängern von Kraftfahrzeugen, die im wesentlichen als ein Sicherungselement ausgebildet ist, das in einem verriegelten Zustand in ein Gegenelement eingreift, wobei im Bereich des Gegenelementes (2) ein Führungselement angeordnet ist, das als ein Stellprofil (10) für das Sicherungselement (1) ausgebildet ist und daß das Stellprofil (10) das Sicherungselement (1) bei der Durchführung eines Schließvorganges der Klappe (8) aus einer Ausgangspositionierung in eine Aufnahmepositionierung überführt, in der das Sicherungselement (1) in das Gegenelement (2) einfürbar ist, dadurch gekennzeichnet, daß das Sicherungselement (1) mit einem beweglich geführten Verriegelungsbolzen (79) versehen ist, der von einem Griffteil (27) betätigbar ist.

2. Vorrichtung nach Anspruch 1, dadurch gekennzeichnet, daß das Stellprofil (10) als ein Auslösemechanismus ausgebildet ist, der das Sicherungselement (1) von der geöffneten in die verriegelte Position überfuhrt..

3. Vorrichtung nach Anspruch 1 oder 2, dadurch gekennzeichnet, daß das betätigbare Griffteil (27) einen Freilauf für den Verriegelungsbolzen (79) bereitstellt.

4. Vorrichtung nach Anspruch 3, dadurch gekennzeichnet, daß der Verriegelungsbolzen (79) von einer Betätigungsklaue (83) des Griffteiles (27) beaufschlagt ist, die einen Stellangriff (85) des Verriegelungsbolzens (79) mit einem Freilauf zwischen Begrenzungsflächen (86,87) führt.

5. Vorrichtung nach Anspruche 3 oder 4, dadurch gekennzeichnet, daß sich der Freilauf in Richtung einer Längsachse (90) des Verriegelungsbolzens (79) erstreckt.

6. Vorrichtung nach einem der Ansprüche 3 bis 5, dadurch gekennzeichnet, daß der Verriegelungsbolzen (79) zur Verspannung ein Keilelement (88) aufweist.

7. Vorrichtung nach Anspruch 1 bis 6, dadurch gekennzeichnet, daß das Gegenelement (1) als Öse ausgebildet ist.

8. Vorrichtung nach Anspruch 1 bis 7, dadurch gekennzeichnet, daß das Stellprofil (10) als ein gebogenes Flachprofil ausgebildet ist.

9. Vorrichtung nach Anspruch 1 bis 8, dadurch gekennzeichnet, daß das Stellprofil (10) auf einem Höhenniveau einer Öffnung (9) in das Gegenelement (2) eirmündet.

10. Vorrichtung nach Ansprüche 1 bis 9, dadurch gekennzeichnet, daß das Sicherungselement (1) im Bereich des Fahrzeuges und das Gegenelement (2) im Bereich der Klappe (8) angeordnet ist.

11. Vorrichtung nach Anspruch 1 bis 9, dadurch gekennzeichnet, daß das Sicherungselement (1) im Bereich der Klappe (8) und das Gegenelement (2) im Bereich des Fahrzeuges angeordnet ist.

12. Vorrichtung nach Ansprüche 1 bis 11, dadurch gekennzeichnet, daß das Sicherungselement (1) und das Gegenelement (2) als ein Spannverschluß ausgebildet sind.

13. Vorrichtung nach einem der Ansprüche 1 bis 12, dadurch gekennzeichnet, daß mindestens zwei Sicherungselemente (1) zur Bewegungskoordinierung miteinander gekoppelt sind.

## Claims

1. Device for the locking of shutters in the field of motor vehicles or of trailers of motor vehicles, which is essentially modelled as a safety element, which engages into an opposite element in its locked state, whereby a guide element is arranged in the area of the opposite element (2), such guide element is modelled as an adjusting section (10) for the safety element (1), and that at the process of closing the shutter (8), the adjusting section (10) transfers the safety element (1) from an original positioning into a receiving positioning, in which the safety element (1) can be induced into the opposite element (2), characterized by the fact that the safety element (1) is provided with a movably directed locking pin (79), which can be operated by means of a handling unit (27).

2. Device according to claim 1 characterized by the fact that the adjusting section (10) is modelled as a release mechanism, which transfers the safety element (1) from the open position into the locked position.

3. Device according to claim 1 or 2 characterized by the fact that the handling unit (27), which can be operated, provides a free running for the locking pin (79).

4. Device according to claim 3 characterized by the fact that the locking pin (79) is impinged on by the operating catch (83) of the handling unit (27), which directs an adjustment contact point (85) of the locking pin (79) with a free running between limiting flanks (86, 87).

5. Device according to claim 3 or 4 characterized by the fact that the free running is stretched in the direction of the longitudinal axis (90) of the locking pin (79).

6. Device according to one of the claims 3 or 5 characterized by the fact that the locking pin (79) shows a wedge element (88) for restraint.

7. Device according to the claims 1 to 6 characterized by the fact that the opposite element (2) is modelled as a hole.

8. Device according to the claims 1 to 7 characterized by the fact that the adjusting section (10) is modelled as a bent flat bar.

9. Device according to the claims 1 to 8 characterized by the fact that the adjusting section (10) joins into the opposite element (2) at a vertical level of an opening (9).

10. Device according to the claims 1 to 9 characterized by the fact that the safety element (1) is arranged in the area of the motor vehicle and that the opposite element (2) is arranged in the area of the shutter (8).

11. Device according to the claims 1 to 9 characterized by the fact that the safety element (1) is arranged in the area of the shutter (8) and that the opposite element (2) is arranged in the area of the motor vehicle.

12. Device according to the claims 1 to 11 characterized by the fact that the safety element (1) and the opposite element (2) are modelled as a tension lock.

13. Device according to one of the claims 1 to 12 characterized by the fact that at least two safety elements (1) are connected with each other for the co-ordination of the movement.

## Revendications

1. Dispositif de verrouillage de volets dans le domaine de véhicules automobiles ou de remorques de véhicules automobiles, qui est réalisé pour l'essentiel comme un élément de sécurité qui, dans un état verrouillé, se prend dans un contre-élément, un élément de guidage étant disposé dans la zone du contre-élément (2), qui est réalisé comme un profil de positionnement (10) pour l'élément de sécurité (1), et, lors de la réalisation d'une opération de fermeture du volet (8), ledit profil de positionnement (10) faisant passer l'élément de sécurité (1) d'un positionnement de départ dans un positionnement de réception dans lequel l'élément de sécurité (1) peut être introduit dans le contre-élément (2), caractérisé par le fait que l'élément de sécurité (1) est pourvu d'un boulon de verrouillage (79) guidé de façon mobile qui peut être actionné par une pièce à poignée (27).

2. Dispositif selon la revendication 1, caractérisé par le fait que le profil de positionnement (10) est réalisé comme un mécanisme de déclenchement qui transfère l'élément de sécurité (1) de la position ouverte dans la position verrouillée.

3. Dispositif selon la revendication 1 ou 2, caractérisé par le fait que la pièce à poignée (27) qui peut être actionnée met à la disposition une course libre pour le boulon de verrouillage (79).

4. Dispositif selon la revendication 3, caractérisé par le fait que le boulon de verrouillage (79) est sollicité par une griffe de manoeuvre (83) de la pièce à poignée (27), qui guide une butée de réglage (85) du boulon de verrouillage (79) avec une course libre entre des surfaces de limitation (86, 87).

5. Dispositif selon la revendication 3 ou 4, caractérisé par le fait que la course libre s'étend dons la direction d'un axe longitudinal (90) du boulon de verrouillage (79).

6. Dispositif selon l'une des revendications 3 à 5, caractérisé par le fait que le bouton de verrouillage (79) présente un élément en forme de coin (88) pour le serrage.

7. Dispositif selon la revendication 1 à 6, caractérisé par le fait que le contre-élément (2) est formé comme oeillet.

8. Dispositif selon la revendication 1 à 7, caractérisé par le fait que le profil de positionnement (10) est réalisé comme un plat plié.

9. Dispositif selon la revendication 1 à 8, caractérisé par le fait que le profil de positionnement (10) débouche dans le contre-élément (2) à un niveau de hauteur d'une ouverture (9).

10. Dispositif selon les revendications 1 à 9, caractérisé par le fait que l'élément de sécurité (1) est disposé dans la zone du véhicule et que le contre-élément (2) est disposé dans la zone du volet (8).

11. Dispositif selon la revendication 1 à 9, caractérisé par le fait que l'élément de sécurité (1) est disposé dans la zone du volet (8) et que le contre-élément (2) est disposé dans la zone du véhicule.

12. Dispositif selon les revendications 1 à 11, caractérisé par le fait que l'élément de sécurité (1) et le contre-élément (2) sont réalisés comme une fermeture de serrage.

13. Dispositif selon l'une des revendications 1 à 12, caractérisé par le fait que deux éléments de sécurité (1) du moins sont couplés l'un avec l'autre pour une coordination de mouvement.
